# EUROPEAN PATENT APPLICATION

(11) **EP 2 882 223 A1**
(43) Date of publication of application: **10.06.2015**
(21) Application number: 13826206.8
(22) Date of filing: 30.07.2013
(51) Int. Cl.: H04W 28/06, H04W 72/04, H04W 92/10

(54) **BASE STATION DEVICE, MOBILE STATION DEVICE, WIRELESS COMMUNICATION METHOD, AND INTEGRATED CIRCUIT**

(30) Priority: 03.08.2012 JP 2012172430
(71) Applicant: Sharp Kabushiki Kaisha, Osaka-shi, Osaka 545-8522 (JP)
(72) Inventor: SUZUKI, Shoichi, Osaka 545-8522 (JP); NAKASHIMA, Daiichiro, Osaka 545-8522 (JP); UEMURA, Katsunari, Osaka 545-8522 (JP); KATO, Yasuyuki, Osaka 545-8522 (JP)
(74) Representative: Müller Hoffmann & Partner
(86) International application number: PCT/JP2013/070543
(87) International publication number: WO 2014/021294

(57) **Abstract**

A flexible subframe is efficiently set. A base station device communicates with a mobile station device using a time division duplex system in a single cell. The base station device includes a transmitting unit that transmits first information indicating an arrangement of a first subframe, a second subframe and a third subframe in a frame, and second information indicating an arrangement of the first subframe, the second subframe, the third subframe and a fourth subframe in the frame to the mobile station device.

## Description

### Technical Field

The present invention relates to a base station device, a mobile station device, a wireless communication method and an integrated circuit.

### Background Art

A cellular mobile communication wireless access system and a wireless network (hereinafter, referred to as "Long Term Evolution (LTE)" or "Evolved Universal Terrestrial Radio Access (EUTRA)") have been examined in the 3rd Generation Partnership Project (3GPP). In the LTE system, an orthogonal frequency division multiplexing (OFDM) system has been used as a downlink communication system. In the LTE system, a single-carrier frequency division multiple access (SC-FDMA) system
has been used as an uplink communication system. In the LTE system, a base station device is also referred to as evolved NodeB (eNodeB) and a mobile station device is also referred to as user equipment (UE). The LTE system is a cellular communication system in which a plurality of coverage areas of the base station device are arranged in a cell shape. A single base station device may manage a plurality of cells.

The LTE system corresponds to a time division duplex (TDD) system. The LTE system using the TDD system is also referred to as a TD-LTE system or an LTE TDD system. The TDD system is a technique that performs time division multiplexing on an uplink signal and a downlink signal in order to perform full duplex communication in a single frequency band.

In the 3GPP, application of traffic adaptation that changes a ratio of uplink resources to downlink resources depending on uplink traffic and downlink traffic to the TD-LTE system has been examined. NPL 1 discloses a method of using a flexible subframe as a method or achieving traffic adaptation. The base station device can receive uplink signals or transmit downlink signals in the flexible subframe. In NPL 1, the mobile station device regards the flexible subframe as a downlink subframe as long as the base station device does not instruct the mobile station device to transmit the uplink signals in the flexible subframe. Traffic adaptation technique is also referred to as dynamic TDD system.

### Citation List

### Non-Patent Literature

NPL 1: "On standardization impact of TDD UL-DL adaptation", R1-122016, 3GPP TSG-RAN WG1 Meeting #69, Prague, Czech Republic, 21st-25th May 2012.

### Summary of Invention

### Technical Problem

Compared to the case in which the ratio of the uplink resources to the downlink resources is not changed, packet throughput is greatly enhanced. However, a sufficient technique of setting the flexible subframe has not been established.

The invention has been made in view of the foregoing circumstances, and it is an object of the invention to provide a base station device, a mobile station device, a wireless communication method and an integrated circuit that can efficiently set a flexible subframe.

### Solution to Problem

(1) In order to achieve the aforementioned object, the present invention provides the following means. A base station device of the present invention is a base station device that communicates with a mobile station device using a time division duplex system in a single cell. The base station device includes: a transmitting unit that transmits first information indicating the arrangement of a first subframe, a second subframe and a third subframe in a frame, and second information indicating the arrangement of the first subframe, the second subframe, the third subframe and a fourth subframe in the frame to the mobile station device. The first subframe is reserved for downlink transmission, the second subframe is reserved for uplink transmission, the third subframe includes a field reserved for the downlink transmission, a field reserved for the uplink transmission, and a field of a guard period, and the fourth subframe is a subframe reserved for the uplink transmission and the downlink transmission.
(2) In the present invention, the transmitting unit transmits third information indicating that the second information has been received.
(3) In the present invention, the transmitting unit does not transmit the second information and/or the third information when the fourth subframe is not included in the frame.
(4) In the present invention, the transmitting unit transmits a message including the first information and the fourth information indicating whether or not the second information has been changed.
(5) In the present invention, the transmitting unit transmits fifth information indicating that the second information has been changed.
(6) A wireless communication method of the present invention is a wireless communication method used in a base station device communicating with a mobile station device using a time division duplex system in a single cell. The method includes: transmitting first information indicating an arrangement of a first subframe, a second subframe and a third subframe in a frame, and second information indicating the arrangement of the first subframe, the second subframe, the third subframe and a fourth subframe in the frame to the mobile station device. The first subframe is reserved for downlink transmission, the second subframe is reserved for uplink transmission, the third subframe includes a field reserved for the downlink transmission, a field reserved for the uplink transmission, and a field of a guard period, and the fourth subframe is a subframe reserved for the uplink transmission and the downlink transmission.
(7) An integrated circuit of the present invention is an integrated circuit that is mounted in a base station device communicating with a mobile station device using a time division duplex system in a single cell. The integrated circuit causes the base station device to exhibit a function of: transmitting first information indicating the arrangement of a first subframe, a second subframe and a third subframe in a frame, and second information indicating an arrangement of the first subframe, the second subframe, the third subframe and a fourth subframe in the frame to the mobile station device. The first subframe is reserved for downlink transmission, the second subframe is reserved for uplink transmission, the third subframe includes a field reserved for the downlink transmission, a field reserved for the uplink transmission, and a field of a guard period, and the fourth subframe is a subframe reserved for the uplink transmission and the downlink transmission.
(8) A mobile station device of the present invention is a mobile station device that communicates with a base station device using a time division duplex system in a single cell. The mobile station device includes: a receiving unit that receives first information indicating the arrangement of a first subframe, a second subframe and a third subframe in a frame, and second information indicating the arrangement of the first subframe, the second subframe, the third subframe and a fourth subframe in the frame from the base station device; and a setting unit that sets the subframe on the basis of the first information or the second information. The first subframe is reserved for downlink transmission, the second subframe is reserved for uplink transmission, the third subframe includes a field reserved for the downlink transmission, a field reserved for the uplink transmission, and a field of a guard period, and the fourth subframe is a subframe reserved for the uplink transmission and the downlink transmission.
(9) In the present invention, the receiving unit receives third information indicating that the second information has been received.
(10) In the present invention, when the third information is not received, the receiving unit does not receive the second information, or does not output the second information to the setting unit.
(11) In the present invention, the receiving unit receives a message including the first information and a fourth information indicating whether or not the second information has been changed.
(12) In the present invention, the receiving unit receives fifth information indicating that the second information has been changed.
(13) In the present invention, the receiving unit tries to receive the second information when receiving the fifth information or the fourth information indicating that the second information has been changed.
(14) A wireless communication method of the present invention is a wireless communication method used in a mobile station device communicating with a base station device using a time division duplex system in a single cell. The method includes: receiving first information indicating the arrangement of a first subframe, a second subframe and a third subframe in a frame, and second information indicating the arrangement of the first subframe, the second subframe, the third subframe and a fourth subframe in the frame from the base station device; and setting the subframe on the basis of the first information or the second information. The first subframe is reserved for downlink transmission, the second subframe is reserved for uplink transmission, the third subframe includes a field reserved for the downlink transmission, a field reserved for the uplink transmission, and a field of a guard period, and the fourth subframe is a subframe reserved for the uplink transmission and the downlink transmission.
(15) An integrated circuit of the present invention is an integrated circuit that is mounted in a mobile station device communicating with a base station device using a time division duplex system in a single cell. The integrated circuit causes the mobile station device to exhibit a function of: receiving first information indicating an arrangement of a first subframe, a second subframe and a third subframe in a frame, and second information indicating the arrangement of the first subframe, the second subframe, the third subframe and a fourth subframe in the frame from the base station device; and setting the subframe on the basis of the first information or the second information. The first subframe is reserved for downlink transmission, the second subframe is reserved for uplink transmission, the third subframe includes a field reserved for the downlink transmission, a field reserved for the uplink transmission, and a field of a guard period, and the fourth subframe is a subframe reserved for the uplink transmission and the downlink transmission.
(16) A base station device of the present invention is a base station device that communicates with a mobile station device using a time division duplex system in a single cell. The base station device includes: a transmitting unit that transmits first information indicating the arrangement of a first subframe, a second subframe and a third subframe in a frame, and sixth information indicating that a fourth subframe is valid in the frame to the mobile station device. The first subframe is reserved for downlink transmission, the second subframe is reserved for uplink transmission, the third subframe includes a field reserved for the downlink transmission, a field reserved for the uplink transmission, and a field of a guard period, and the fourth subframe is a subframe reserved for the uplink transmission and the downlink transmission.
(17) In the base station device of the present invention, the sixth information indicates that the first subframe of a specific number is valid as the fourth subframe in the frame.
(18) In the base station device of the present invention, the sixth information indicates that the second subframe of a specific number is valid as the fourth subframe in the frame.
(19) In the base station device of the present invention, the sixth information indicates the specific number.
(20) A wireless communication method of the present invention is a wireless communication method used in a base station device communicating with a mobile station device using a time division duplex system in a single cell. The method includes: transmitting first information indicating an arrangement of a first subframe, a second subframe and a third subframe in a frame, and sixth information indicating that a fourth subframe is valid in the frame to the mobile station device. The first subframe is reserved for downlink transmission, the second subframe is reserved for uplink transmission, the third subframe includes a field reserved for the downlink transmission, a field reserved for the uplink transmission, and a field of a guard period, and the fourth subframe is a subframe reserved for the uplink transmission and the downlink transmission.
(21) An integrated circuit of the present invention is an integrated circuit that is mounted in a base station device communicating with a mobile station device using a time division duplex system in a single cell. The integrated circuit causes the base station device to exhibit a function of: transmitting first information indicating the arrangement of a first subframe, a second subframe and a third subframe in a frame, and sixth information indicating that a fourth subframe is valid in the frame to the mobile station device. The first subframe is reserved for downlink transmission, the second subframe is reserved for uplink transmission, the third subframe includes a field reserved for the downlink transmission, a field reserved for the uplink transmission, and a field of a guard period, and the fourth subframe is a subframe reserved for the uplink transmission and the downlink transmission.
(22) A mobile station device of the present invention is a mobile station device communicating with a base station device using a time division duplex system in a single cell. The mobile station device includes: a receiving unit that receives first information indicating the arrangement of a first subframe, a second subframe and a third subframe in a frame, and sixth information indicating that a fourth subframe is valid in the frame from the base station device; and a setting unit that sets the subframe on the basis of the first information, or the first information and the sixth information. The first subframe is reserved for downlink transmission, the second subframe is reserved for uplink transmission, the third subframe includes a field reserved for the downlink transmission, a field reserved for the uplink transmission, and a field of a guard period, and the fourth subframe is a subframe reserved for the uplink transmission and the downlink transmission.
(23) In the present invention, the setting unit resets the first subframe of a specific number to the fourth subframe in the frame on the basis of the sixth information.
(24) In the present invention, the setting unit resets the second subframe of a specific number to the fourth subframe in the frame on the basis of the sixth information.
(25) In the mobile station of the present invention, the sixth information indicates the specific number.
(26) A wireless communication method of the present invention is a wireless communication method used in a mobile station device communicating with a base station device using a time division duplex system in a single cell. The method includes: receiving first information indicating an arrangement of a first subframe, a second subframe and a third subframe in a frame, and sixth information indicating that a fourth subframe is valid in the frame from the base station device; and setting the subframe on the basis of the first information, or the first information and the sixth information. The first subframe is reserved for downlink transmission, the second subframe is reserved for uplink transmission, the third subframe includes a field reserved for the downlink transmission, a field reserved for the uplink transmission, and a field of a guard period, and the fourth subframe is a subframe reserved for the uplink transmission and the downlink transmission.
(27) An integrated circuit of the present invention is an integrated circuit that is mounted in a mobile station device communicating with a base station device using a time division duplex system in a single cell. The integrated circuit causes the mobile station device to exhibit a function of: receiving first information indicating the arrangement of a first subframe, a second subframe and a third subframe in a frame, and sixth information indicating that a fourth subframe is valid in the frame from the base station device; and setting the subframe on the basis of the first information, or the first information and the sixth information. The first subframe is reserved for downlink transmission, the second subframe is reserved for uplink transmission, the third subframe includes a field reserved for the downlink transmission, a field reserved for the uplink transmission, and a field of a guard period, and the fourth subframe is a subframe reserved for the uplink transmission and the downlink transmission.

### Advantageous Effects of Invention

According to the present invention, it is possible to efficiently set a flexible subframe.

### Brief Description of Drawings

[Fig. 1] Fig. 1 is a conceptual diagram illustrating a wireless communication system according to this embodiment.
[Fig. 2] Fig. 2 is a diagram illustrating the schematic structure of a radio frame according to this embodiment.
[Fig. 3] Fig. 3 is a diagram illustrating the structure of a slot according to this embodiment.
[Fig. 4] Fig. 4 is a diagram illustrating an example of the arrangement of physical channels and physical signals in a downlink subframe according to this embodiment.
[Fig. 5] Fig. 5 is a diagram illustrating an example of the arrangement of physical channels and physical signals in an uplink subframe according to this embodiment.
[Fig. 6] Fig. 6 is a diagram illustrating an example of the arrangement of physical channels and physical signals in a special subframe according to this embodiment.
[Fig. 7] Fig. 7 is a schematic block diagram illustrating the structure of a mobile,station device 1 according to this embodiment.
[Fig. 8] Fig. 8 is a schematic block diagram illustrating the structure of a base station device 3 according to this embodiment.
[Fig. 9] Fig. 9 is a table showing an example of an uplink-downlink configuration indicated by first information of a first embodiment.
[Fig. 10] Fig. 10 is a table showing an example of an uplink-downlink configuration indicated by second information of the first embodiment.
[Fig. 11] Fig. 11 is a diagram illustrating an operation of a mobile station device 1 according to a first embodiment.
[Fig. 12] Fig. 12 is a diagram illustrating an operation of a mobile station device 1 according to a second embodiment.
[Fig. 13] Fig. 13 is a diagram illustrating an operation of a mobile station device 1 according to a third embodiment.
[Fig. 14] Fig. 14 is a diagram illustrating an operation of a mobile station device 1 according to a fourth embodiment.
[Fig. 15] Fig. 15 is a diagram illustrating an operation of a mobile station device 1 according to a fifth embodiment.
[Fig. 16] Fig. 16 is a diagram showing an example of an uplink-downlink configuration in the fifth embodiment. Description of Embodiments

Hereinafter, an embodiment of the invention will be described.

In this embodiment, a mobile station device communicates with a single cell. However, the present invention is applicable to a case in which the mobile station device communicates with a plurality of cells. A technique in which the mobile station device communicates with the plurality of cells is referred to as cell aggregation or carrier aggregation. In the cell aggregation, the present invention may be applied to each of the plurality of cells. In the carrier aggregation, the present invention may be applied to some of the plurality of cells. A time division duplex (TDD) system is applied to the wireless communication system of this embodiment.

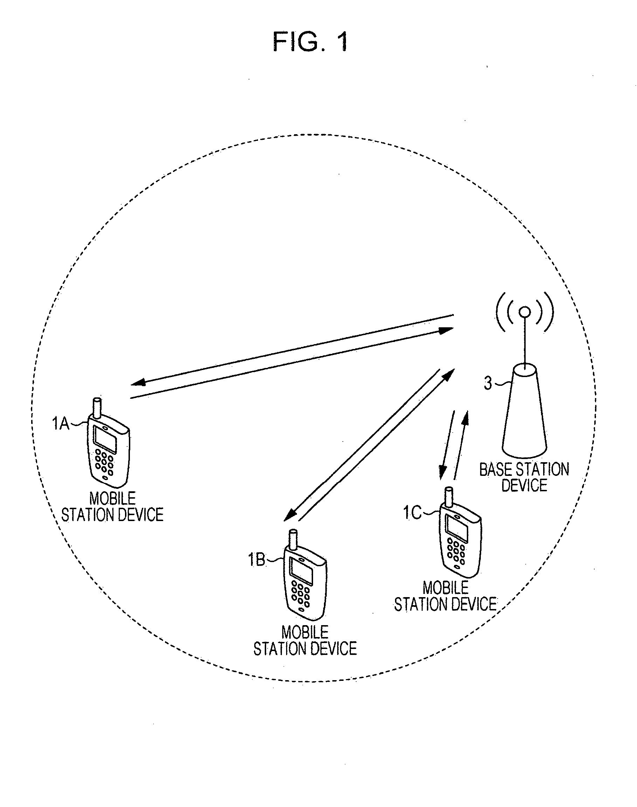

Fig. 1 is a conceptual diagram illustrating a wireless communication system according to this embodiment. In Fig. 1, the wireless communication system includes mobile station devices 1A to 1C and a base station device 3. Hereinafter, the mobile station devices 1A to 1C are referred to as mobile station devices 1.

Physical channels and physical signals of this embodiment will be described.

In Fig. 1, in uplink wireless communication from the mobile station device 1 to the base station device 3, the following uplink physical channels are used. The uplink physical channels are used to transmit information output from a higher layer.
- Physical uplink control channel (PUCCH)
- Physical uplink shared channel (PUSCH)
- Physical random access channel (PRACH)

The PUCCH is a physical channel used to transmit uplink control information (UCI). The uplink control information includes channel state information (CSI) of a downlink, a scheduling request (SR) indicating a request for a PUSCH resource, and acknowledgement (ACK)/negative-acknowledgement (NACK) indicating whether or not decoding of the downlink data received by the mobile station device 1 succeeds.

The PUSCH is a physical channel used to transmit uplink data (UL-SCH: Uplink-Shared Channel). The PUSCH may be used to transmit the ACK/NACK and/or the channel state information together with the uplink data. The PUSCH may be used to transmit only the channel state information or only the ACK/NACK and the channel state information.

The PRACH is a physical channel used to transmit a random access preamble. The PRACH primarily serves to allow the mobile station device 1 to be synchronized with the base station device 3 in the time domain. In addition, the PRACH is used to indicate an initial connection establishment procedure, a handover procedure, a connection re-establishment procedure, synchronization of uplink transmission (timing adjustment), and a request for a PUSCH resource.

In Fig. 1, in the uplink wireless communication, the following uplink physical signals are used. The uplink physical signal is not used to transmit information output from the higher layer, but is used by a physical layer.
- Uplink reference signal (UL RS)

In this embodiment, the following two types of uplink reference signals are used.
- Demodulation reference signal (DMRS)
- Sounding reference signal (SRS)

The DMRS relates to the transmission of the PUSCH or the PUCCH. The DMRS is time-multiplexed with the PUSCH or the PUCCH. The base station device 3 uses the DMRS in order to correct the propagation path of the PUSCH or the PUCCH. Hereinafter, the simultaneous transmission of the PUSCH and the DMRS is simply referred to as the transmission of the PUSCH. Hereinafter, the simultaneous transmission of the PUCCH and the DMRS is simply referred to as the transmission of the PUCCH.

The SRS does not relate to the transmission of the PUSCH or the PUCCH. The base station device 3 uses the SRS in order to measure a channel state of the uplink. The mobile station device 1 transmits a first SRS in a first resource set by the higher layer. When receiving information indicating a request for the transmission of the SRS through the PDCCH, the mobile station device 1 transmits a second SRS in a second resource set by the higher layer by only once. The first SRS is referred to as a periodic SRS. The second SRS is referred to as an aperiodic SRS.

In Fig. 1, in the downlink wireless communication from the base station device 3 to the mobile station device 1, the following downlink physical channels are used. The downlink physical channels are used to transmit information output from the higher layer.
- Physical broadcast channel (PBCH)
- Physical control format indicator channel (PCFICH)
- Physical hybrid automatic repeat request indicator channel (PHICH)
- Physical downlink control channel (PDCCH)
- Enhanced physical downlink control channel (ePDCCH)
- Physical downlink shared channel (PDSCH)

The PBCH is used to notify a master information block (MIB, broadcast channel (BCH)) which is shared by the mobile station devices 1. The PBCH is transmitted at an interval of 40 ms. During timing having an interval of 40 ms, blind detection is performed in the mobile station device 1. The PBCH is repeatedly transmitted with a period of 10 ms.

The PCFICH is used to transmit information for designating a region (the number of OFDM symbols) which is used to transmit the PDCCH.

The PHICH is used to transmit a HARQ indicator (HARQ feedback or response information) which indicates acknowledgement (ACK) or negative acknowledgement (NACK) of the uplink shared channel (UL-SCH) received by the base station device 3. For example, when receiving the HARQ indicator indicating the ACK, the mobile station device 1 does not re-transmit corresponding uplink data. For example, when receiving the HARQ indicator indicating the NACK, the mobile station device 1 re-transmits corresponding uplink data. A single PHICH transmits the HARQ indicator for a single uplink data item. The base station device 3 transmits the HARQ indicators for a plurality of uplink data items which are included in the same PUSCH, using a plurality of PHICHs.

The PDCCH and The ePDCCH are used to transmit downlink control information (DCI). The downlink control information includes a downlink grant (referred to as "downlink assignment") and an uplink grant. The downlink grant is downlink control information which is used to schedule a single PDSCH in a single cell. The downlink grant is used to schedule the PDSCH in the same subframe as that in which the downlink grant is transmitted. The uplink grant is downlink control information which is used to schedule a single PUSCH in a single cell. The uplink grant is used to schedule a single PUSCH in a subframe that is four or more subframes after the subframe in which the uplink grant is transmitted.

The PDSCH is used to transmit downlink data (downlink shared channel: DL-SCH).

In Fig. 1, in the downlink wireless communication, the following downlink physical signals are used. The downlink physical signals are not used to transmit information output from the higher layer, but are used by the physical layer.
- Synchronization signal (SS)
- Downlink reference signal (DL RS)

The synchronization signals are used to allow the mobile station device 1 to be synchronized in the frequency domain and the time domain of the downlink. The downlink reference signal is used to correct the propagation path of the downlink physical channel by the mobile station device 1. The downlink reference signal is used to calculate the channel state information of the downlink by the mobile station device 1.

The downlink physical channel and the downlink physical signal are generically referred to as a downlink signal. The uplink physical channel and the uplink physical signal are generically referred to as an uplink signal. The downlink physical channel and the uplink physical channel are generically referred to as a physical channel. The downlink physical signal and the uplink physical signal are generically referred to as a physical signal.

The BCH, the UL-SCH, and the DL-SCH are transport channels. The channel which is used in a medium access control (MAC) layer is referred to as a transport channel. The unit of the transport channel used in the MAC layer is also referred to as a transport block (TB) or a MAC protocol data unit (PDU). Hybrid automatic repeat request (HARQ) control is performed for each transport block in the MAC layer. The transport block is the unit of data which is transmitted (delivered) by the MAC layer to the physical layer. In the physical layer, the transport block is mapped to a code word and a coding process is performed for each code word.

Hereinafter, the structure of the radio frame according to this embodiment will be described.

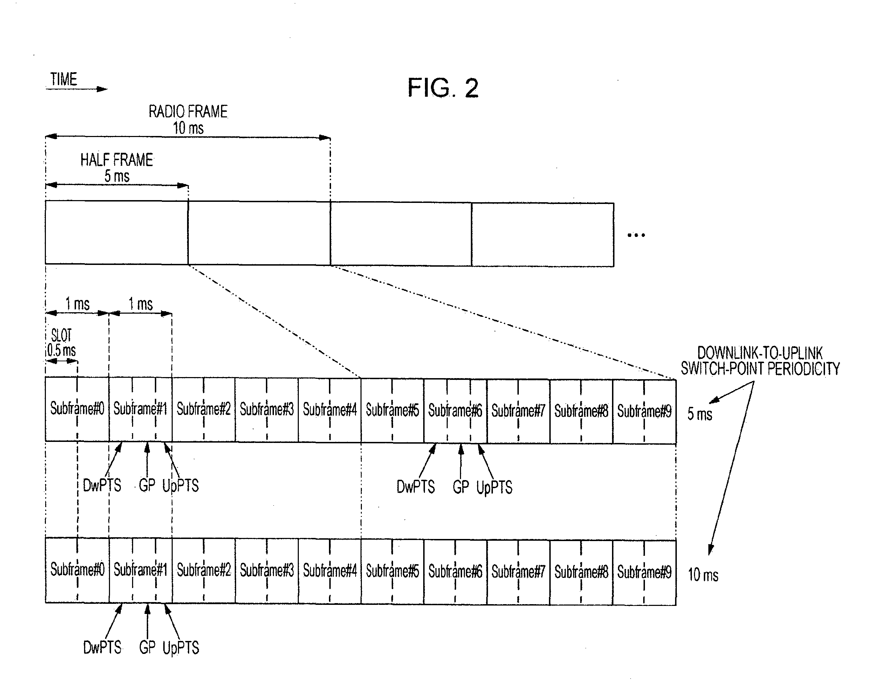

Fig. 2 is a diagram illustrating a schematic structure of the radio frame according to this embodiment. Each radio frame has a length of 10 ms. Each radio frame includes two half frames. Each half frame has a length of 5 ms. Each half frame includes five subframes. Each subframe has a length of 1 ms, and is defined by two consecutive slots. An i-th subframe in the radio frame includes a (2xi)-th slot and a (2xi+1)-th slot. That is, ten subframes can be used at an interval of 10 ms. Each slot has a length of 0.5 ms.

In this embodiment, the following four types of subframes are used.
- Downlink subframe (first subframe)
- Uplink subframe (second subframe)
- Special subframe (third subframe)
- Flexible subframe (fourth subframe)

The downlink subframe is a subframe reserved for downlink transmission. The uplink subframe is a subframe reserved for uplink transmission. The special subframe includes three fields. The three fields are a downlink pilot time slot (DwPTS), a guard period (GP), and an uplink pilot time slot (UpPTS). The total length of the DwPTS, the GP, and the UpPTS is 1 ms. The DwPTS is a field which is reserved for downlink transmission. The UpPTS is a field which is reversed for uplink transmission. The GP is a field in which downlink transmission and uplink transmission are not performed.

The flexible subframe is a subframe in which the downlink transmission and/or the uplink transmission are performed. The base station device 3 and the mobile station device 1 may regard the flexible subframe as the downlink subframe. The base station device 3 and the mobile device 1 may regard the flexible subframe as the uplink subframe. The base station device 3 and the mobile station device 1 may regard the flexible subframe as a subframe including a field reserved for the uplink transmission and a field reserved for the downlink transmission.

A single radio frame includes at least the downlink subframe, the uplink subframe, and the special subframe.

The wireless communication system according to this embodiment supports a downlink-uplink switch-point periodicity of 5 ms and 10 ms. When the downlink-uplink switch-point periodicity is 5 ms, the special subframe is included in two half frames of the radio frame. When the downlink-uplink switch-point periodicity is 10 ms, the special subframe is included only in the first half frame of the radio frame. A subframe 1 and a subframe 6 of the radio frame are special subframes.

The subframes 0 and 5 and DwPTS are always reserved for the downlink transmission. The subframe immediately after the special subframe and the UpPTS are always reserved for the uplink transmission.

Next, the structure of the slot according to this embodiment will be described.

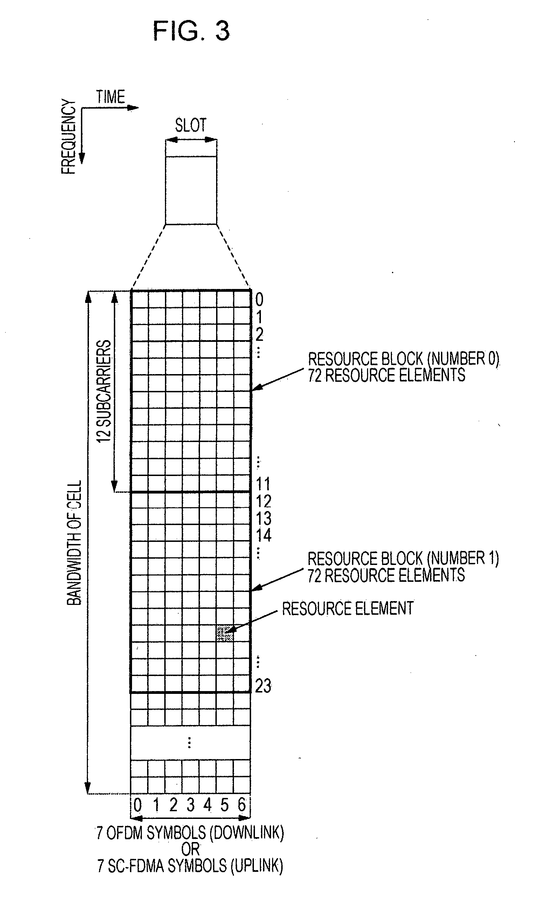

Fig. 3 is a diagram showing the structure of the slot according to this embodiment. The physical signals or the physical channels transmitted in the respective slots are represented by the resources. In the downlink, a resource grid is defined by a plurality of subcarriers and a plurality of OFDM symbols. In the uplink, a resource grid is defined by a plurality of subcarriers and a plurality of SC-FDMA symbols. The number of subcarriers constituting one slot depends on a bandwidth of the cell. The number of OFDM symbols or SC-FDMA symbols constituting one slot is seven. Each element in the resource grid is referred to as a resource element. The resource element is identified using a subcarrier number and an OFDM symbol number or an SC-FDMA symbol number.

The resource block is used to represent the mapping of a given physical channel (for example, the PDSCH or the PUSCH) to the resource element. For the resource block, a virtual resource block and a physical resource block are defined. First, a given physical channel is mapped to the virtual resource block. Then, the virtual resource block is mapped to the physical resource block. One physical resource block is defined from 7 consecutive OFDM symbols or SC-FDMA symbols in the time domain and 12 consecutive fs in the frequency domain. Therefore, one physical resource block includes (7x12) resource elements. In addition, one physical resource block corresponds to one slot in the time domain and corresponds to 180 kHz in the frequency domain. The physical resource block is numbered from 0 in the frequency domain.

Next, the physical channel and the physical signal which are transmitted in each subframe will be described.

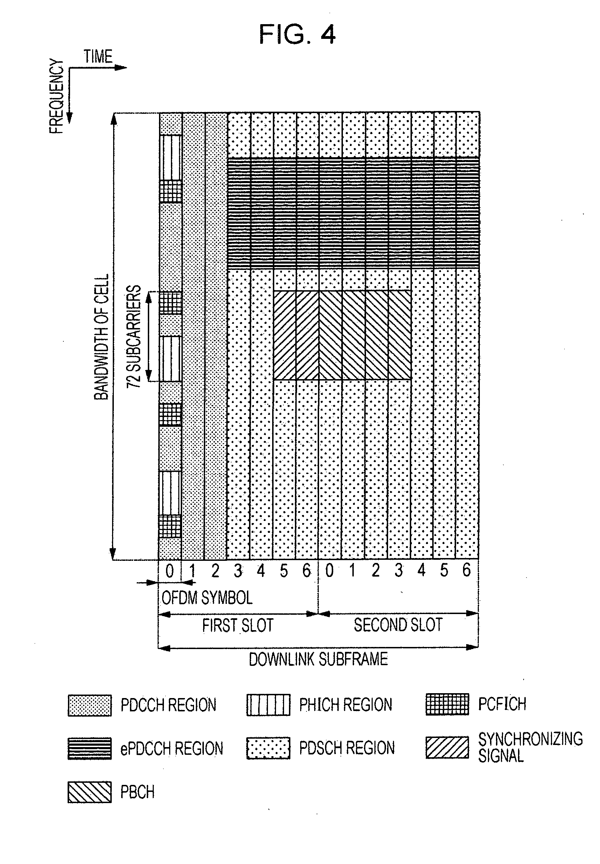

Fig. 4 is a diagram illustrating an example of the arrangement of the physical channels and the physical signals in the downlink subframe according to this embodiment. The base station device 3 may transmit the downlink physical channels (PBCH, PCFICH, PHICH, PDCCH, ePDCCH and PDSCH) and the downlink physical signals (synchronization signals and downlink reference signals) in the downlink subframe. The PBCH is transmitted in only subframe 0 of the radio frame. The synchronization signals are arranged in the subframes 0 and 5 of the radio frame. The downlink reference signals are arranged in the resource elements that are distributed in the frequency domain and the time domain. For the sake of convenience in description, the downlink reference signals are not illustrated in Fig. 4.

In a PDCCH region, frequency multiplexing and time multiplexing may be performed on a plurality of PDCCHs. In an ePDCCH region, frequency multiplexing, time multiplexing, and spatial multiplexing may be performed on a plurality of ePDCCHs. In a PDSCH region, frequency multiplexing and spatial multiplexing may be performed on a plurality of PDSCHs. Time multiplexing may be performed on the PDCCH and the PDSCH or the ePDCCH. Frequency multiplexing may be performed on the PDSCH and the ePDCCH.

The base station device 3 transmits the PDCCH (uplink grant) related to the PUSCH of the flexible subframe or the uplink subframe in only the downlink subframe. The base station device 3 transmits the PHICH (ACK/NACK) related to the PUSCH of the flexible subframe or the uplink subframe in only the downlink subframe.

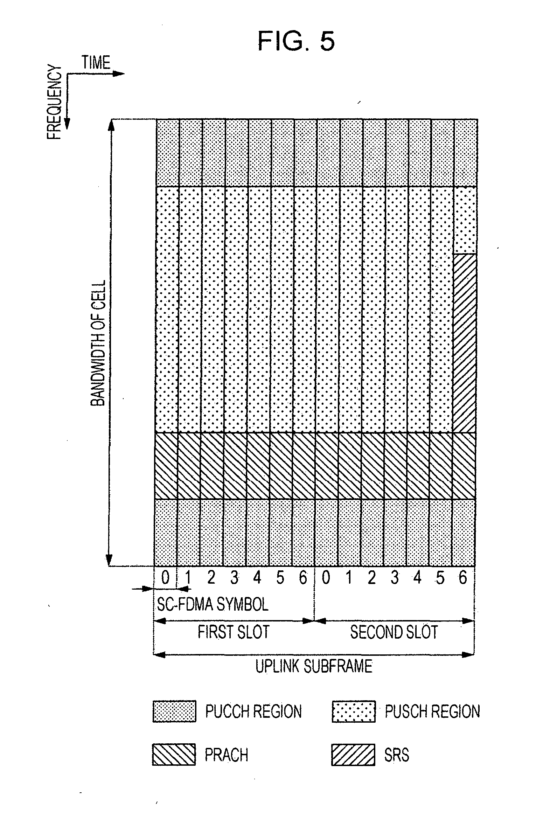

Fig. 5 is a diagram showing an example of the arrangement of the physical channels and the physical signals in the uplink subframe according to this embodiment. The mobile station device 1 may transmit the uplink physical channels (PUCCH, PUSCH and PRACH) and the uplink physical signals (DMRS and SRS) in the uplink subframe. In a PUCCH region, frequency multiplexing, time multiplexing and code multiplexing are performed on a plurality of PUCCHs. In a PUSCH region, frequency multiplexing and spatial multiplexing may be performed on a plurality of PUSCHs. Frequency multiplexing may be performed on the PUCCH and the PUSCH. The PRACHs may be arranged in a single subframe or over two subframes. Code multiplexing may be performed on the plurality of PRACHs.

The SRS is transmitted using the last SC-FDMA symbol in the uplink subframe. That is, the SRS is arranged in the last SC-FDMA symbol of the uplink subframe. The mobile station device 1 is not capable of transmitting the SRS and the PUCCH/PUSCH/PRACH at the same time with a single SC-FDMA symbol of a single cell. The mobile station device 1 can transmit the PUSCH and/or the PUCCH using an SC-FDMA symbol except for the last SC-FDMA symbol in a single uplink subframe of a single cell and transmit the SRS using the last SC-FDMA symbol in the uplink subframe. That is, the mobile station device 1 can transmit both the SRS and the PUSCH/PUCCH in the single uplink subframe of the single cell. Time multiplexing is performed on the DMRS and the PUCCH or the PUSCH. For simplicity of illustration, the DMRS is not shown in Fig. 5.

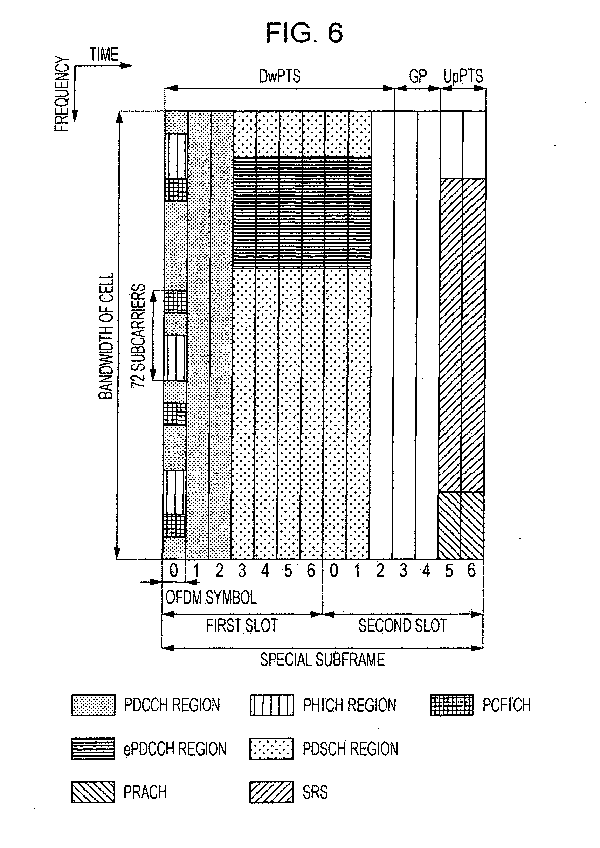

Fig. 6 is a diagram showing an example of the arrangement of the physical channels and the physical signals in the special subframe according to this embodiment. In Fig. 6, the DwPTS includes first to ninth SC-FDMA symbols in the special subframe, the GP includes tenth to twelfth SC-FDMA symbols in the special subframe, and the UpPTS includes thirteenth and fourteenth SC-FDMA symbols in the special subframe.

The base station device 3 may transmit the PCFICH, the PHICH, the PDCCH, the ePDCCH, the PDSCH, and the downlink reference signal in the DwPTS of the special subframe. The base station device 3 does not transmit the PBCH and the synchronization signal in the DwPTS of the special subframe. The mobile station device 1 may transmit the PRACH and the SRS in UpPTS of the special subframe. That is, the mobile station device 1 does not transmit the PUCCH, the PUSCH, and the DMRS in the UpPTS of the special subframe.

Hereinafter, the physical channels and the physical signals transmitted in the flexible subframe will be described.

The base station device 3 can transmit at least the ePDCCH and the PDSCH in the flexible subframe. The base station device 3 may transmit the PCFICH and the PDCCH in the flexible subframe. The base station device 3 does not transmit the PBCH and the synchronization signal in the flexible subframe. The mobile station device 1 can transmit the PUSCH, the DMRS and the SRS in the flexible subframe. The mobile station device 1 does not transmit the PRACH and the PUCCH in the flexible subframe.

The mobile station device 1 regards the flexible subframe as the downlink subframe or the uplink subframe depending on whether or not the transmission of the PUSCH and/or the SRS are scheduled in the flexible subframe. That is, the mobile station device 1 controls whether or not the receiving process of the downlink physical channel and/or the downlink physical signal is performed or the transmitting process of the uplink physical channel and/or the uplink physical signal is performed in the flexible subframe depending on whether or not the transmission of the PUSCH and/or the SRS is scheduled in the flexible subframe.

When the transmission of the PUSCH and the SRS is scheduled in the flexible subframe, the mobile station device 1 transmits the PUSCH and the SRS in the flexible subframe, and does not perform the receiving process (monitoring) of the downlink control information through the PDCCH and/or the ePDCCH. When the transmission of the PUSCH and the SRS is scheduled in the flexible subframe, the mobile station device 1 regards the flexible subframe as the uplink subframe.

When the transmission of the SRS is not scheduled and the transmission of the PUSCH is scheduled in the flexible subframe, the mobile station device 1 transmits the PUSCH in the flexible subframe, and does not perform the receiving process (monitoring) of the downlink control information through the PDCCH and/or the ePDCCH. When the transmission of the SRS is not scheduled and the transmission of the PUSCH is scheduled in the flexible subframe, the mobile station device 1 regards the flexible subframe as the uplink subframe.

When the transmission of the PUSCH is not scheduled and the transmission of the SRS is scheduled in the flexible subframe, the mobile station device 1 transmits the SRS in the flexible subframe, and does not perform the receiving process (monitoring) of the downlink control information through the PDCCH and/or the ePDCCH. When the transmission of the PUSCH is not scheduled and the transmission of the SRS is scheduled in the flexible subframe, the mobile station device 1 regards the flexible subframe as the uplink subframe.

When the transmission of the PUSCH and SRS is not scheduled in the flexible subframe, the mobile station device 1 performs the receiving process (monitoring) of at least the downlink grant through the PDCCH and/or the ePDCCH. When the downlink grant is detected in the flexible subframe, the mobile station device 1 performs the receiving process of the PDSCH according to the detected downlink grant in the flexible subframe. When the transmission of the PUSCH and SRS is not scheduled in the flexible subframe, the mobile station device 1 regards the flexible subframe as the downlink subframe.

The case in which the transmission of the PUSCH and SRS is scheduled in the flexible subframe corresponds to a case where information that schedules the PUSCH of the flexible subframe is detected (received) in a downlink subframe before the flexible subframe.

When the transmission of the PUSCH is not scheduled and the transmission of the SRS is scheduled in the flexible frame, the mobile station device 1 may transmit the SRS in the flexible subframe, may not perform the receiving process (monitoring) of the ePDCCH, and may perform the receiving process (monitoring) of the downlink control information (for example, a DCI format 3) other than the downlink grant using the PDCCH. Since the PDCCH is arranged in the first symbol of the flexible subframe and the SRS is arranged in the last symbol of the flexible subframe, the symbol in which the PDCCH and the SRS are not arranged functions as the GP. That is, when the transmission of the PUSCH is not scheduled and the transmission of the SRS is scheduled, the mobile station device 1 may regard the flexible subframe as a subframe including a field reserved for the uplink transmission and a field reserved for the downlink transmission.

Hereinafter, the structure of the device according to this embodiment will be described.

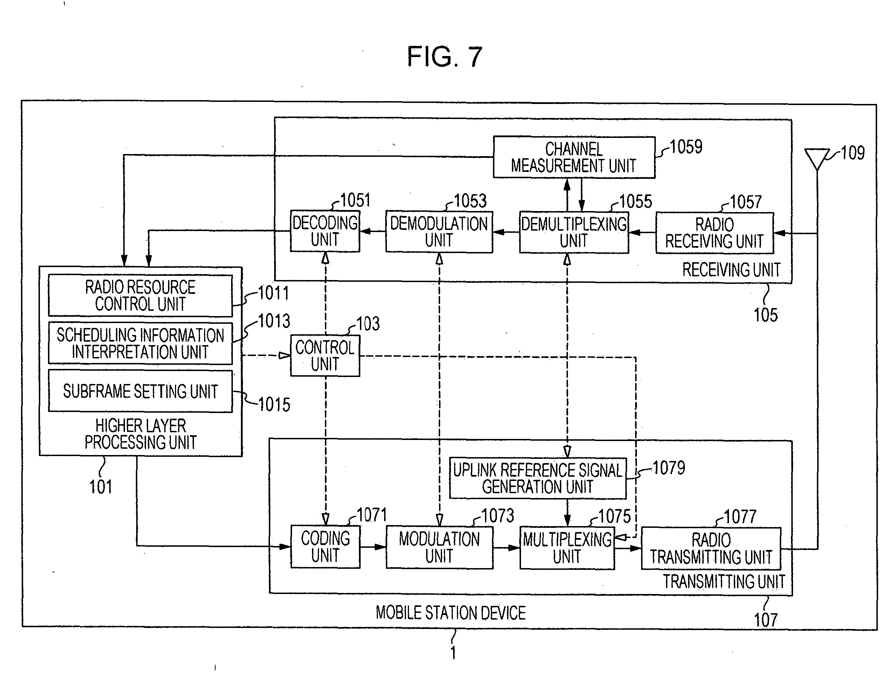

Fig. 7 is a schematic block diagram showing the structure of the mobile station device 1 according to this embodiment. As illustrated in the drawing, the mobile station device 1 includes a higher layer processing unit 101, a control unit 103, a receiving unit 105, a transmitting unit 107, and a transmitting/receiving antenna 109. The higher layer processing unit 101 includes a radio resource control unit 1011, a scheduling information interpretation unit 1013, and a subframe setting unit 1015. The receiving unit 105 includes a decoding unit 1051, a demodulation unit 1053, a demultiplexing unit 1055, a radio receiving unit 1057, and a channel measurement unit 1059. The transmitting unit 107 includes a coding unit 1071, a modulation unit 1073, a multiplexing unit 1075, a radio transmitting unit 1077, and an uplink reference signal generation unit 1079.

The higher layer processing unit 101 outputs uplink data (transport block) generated by, for example, the operation of the user to the transmitting unit 107. The higher layer processing unit 101 processes a medium access control (MAC) layer, a packet data convergence protocol (PDCP) layer, a radio link control (RLC) layer, and a radio resource control (RRC) layer.

The radio resource control unit 1011 of the higher layer processing unit 101 manages various kinds of setting information of the mobile station device. In addition, the radio resource control unit 1011 generates information to be arranged in each uplink channel and outputs the information to the transmitting unit 107.

The scheduling information interpretation unit 1013 of the higher layer processing unit 101 interprets information used to schedule the physical channel (PUSCH or PDSCH) which is received through the receiving unit 105, generates control information for controlling the receiving unit 105 and the transmitting unit 107 on the basis of the interpretation result of the information, and outputs the control information to the control unit 103.

The subframe setting unit 1015 of the higher layer processing unit 101 manages an uplink-downlink configuration. The subframe setting unit 1015 determines whether or not to perform a downlink receiving process or to perform an uplink transmitting process in the flexible subframe. The subframe control unit 1015 determines whether or not to perform the receiving process of the PDCCH and/or the ePDCCH in the flexible subframe. The subframe control unit 1015 determines whether or not to monitor the downlink grant using the PDCCH and/or the ePDCCH in the flexible subframe.

The control unit 103 generates control signals for controlling the receiving unit 105 and the transmitting unit 107, on the basis of the control information from the higher layer processing unit 101. The control unit 103 outputs the generated control signals to the receiving unit 105 and the transmitting unit 107 to control the receiving unit 105 and the transmitting unit 107.

The receiving unit 105 performs demultiplexing, demodulation, and decoding on the signal which is received from the base station device 3 through the transmitting/receiving antenna 109 in response to the control signal input from the control unit 103 and outputs the decoded information to the higher layer processing unit 101.

The radio receiving unit 1057 converts (down-conversion) the downlink signal received through the transmitting/receiving antenna 109 into a signal having an intermediate frequency to remove an unnecessary frequency component, controls an amplification level such that a signal level is appropriately maintained, performs the orthogonal demodulation on the signal on the basis of the orthogonal component and an in-phase component of the received signal, and converts the orthogonal-demodulated analog signal into a digital signal. The radio receiving unit 1057 performs a fast Fourier transform (FFT) on a signal obtained by removing a portion corresponding to a guard interval (GI) from the converted digital signal, and extracts a signal of the frequency domain.

The demultiplexing unit 1055 demultiplexes the extracted signal into the PHICH, the PDCCH, the ePDCCH, the PDSCH, and the downlink reference signal. In addition, the demultiplexing unit 1055 compensates for the propagation path of the PHICH, the PDCCH, the ePDCCH, and the PDSCH from the estimated value of the propagation path which is input from the channel measurement unit 1059. The demultiplexing unit 1055 outputs the demultiplexed downlink reference signal to the channel measurement unit 1059.

The demodulation unit 1053 multiplies the PHICH by a corresponding code to synthesize them, demodulates the synthesized signal using a binary phase shift keying (BPSK) modulation method, and outputs the demodulated signal to the decoding unit 1051. The decoding unit 1051 decodes the PHICH addressed to the mobile station device and outputs the decoded HARQ indicator to the higher layer processing unit 101. The demodulation unit 1053 demodulates the PDCCH and/or the ePDCCH using a QPSK modulation method and outputs the demodulated PDCCH and/or ePDCCH to the decoding unit 1051. The decoding unit 1051 tries to blind-decode the PDCCH and/or the ePDCCH. When blind-decoding has succeeded, the decoding unit 1051 outputs the decoded downlink control information and the RNTI corresponding to the downlink control information to the higher layer processing unit 101.

The demodulation unit 1053 demodulates the PDSCH using a modulation method notified by the downlink grant, such as quadrature phase shift keying (QPSK), 16-quadrature amplitude modulation (QAM), or 64QAM, and outputs the demodulated PDSCH to the decoding unit 1051. The decoding unit 1051 performs decoding on the basis of information about the coding rate notified by downlink control information and outputs the decoded downlink data (TB) to the higher layer processing unit 101.

The channel measurement unit 1059 measures downlink path loss or a downlink channel state from the downlink reference signal which is input from the demultiplexing unit 1055 and outputs the measured downlink path loss or channel state to the higher layer processing unit 101. The channel measurement unit 1059 calculates the estimated value of the propagation path of the downlink channel from the downlink reference signal and outputs the estimated value to the demultiplexing unit 1055.

The transmitting unit 107 generates an uplink reference signal in response to the control signal input from the control unit 103, codes and modulates the uplink data (TB) input from the higher layer processing unit 101, multiplexes the PUCCH, the PUSCH, and the generated uplink reference signal, and transmits the multiplexed signal to the base station device 3 through the transmitting/receiving antenna 109.

The coding unit 1071 performs coding, such as convolution cording or block coding, on the uplink control information input from the higher layer processing unit 101. In addition, the coding unit 1071 performs turbo cording on the basis of the information used to schedule the PUSCH.

The modulation unit 1073 modulates coded bits input from the coding unit 1071 using a modulation method notified by downlink control information such as BPSK, QPSK, 16QAM and 64QAM or a modulation method determined in advance for each channel. The modulation unit 1073 determines the number of data sequences on which spatial multiplexing is performed based on information used to schedule the PUSCH, maps a plurality of uplink data items to a plurality of sequences transmitted in the same PUSCH by using multiple-input multiple-output (MIMO) spatial multiplexing (SM), and performs precoding on the sequences.

The uplink reference signal generation unit 1079 generates sequences obtained by a predetermined rule on the basis of a physical cell identity (PCI, referred to as a cell ID) for identifying the base station device 3, a bandwidth in which the uplink reference signal is arranged, a cyclic shift notified by the uplink grant, and a parameter value for generating the DMRS sequence. The multiplexing unit 1075 rearranges modulated symbols of the PUSCH in parallel in response to the control signals input from the control unit 103 and performs a discrete Fourier transform (DFT) on the rearranged symbols. The multiplexing unit 1075 multiplexes the PUCCH and PUSCH signals and the generated uplink reference signal for each transmitting antenna port. That is, the multiplexing unit 1075 arranges the PUCCH and PUSCH signals and the generated uplink reference signal in the resource elements for each transmitting antenna port.

The radio transmitting unit 1077 performs an inverse fast Fourier transform (IFFT) on the multiplexed signals, performs the SC-FDMA modulation on the signals to generate the SC-FDMA symbols, adds the guard interval to the modulated SC-FDMA symbol to generate a baseband digital signal, and converts the baseband digital signal into an analog signal. Thereafter, the radio transmitting unit generates an in-phase component and an orthogonal component of an intermediate frequency from the analog signal, removes extra frequency components for an intermediate frequency band, and converts (up-conversion) a signal having an intermediate frequency into a signal having a high frequency. Subsequently, the radio transmitting unit removes extra frequency components, amplifies a power, and transmits the amplified signal to the transmitting/receiving antenna 109.

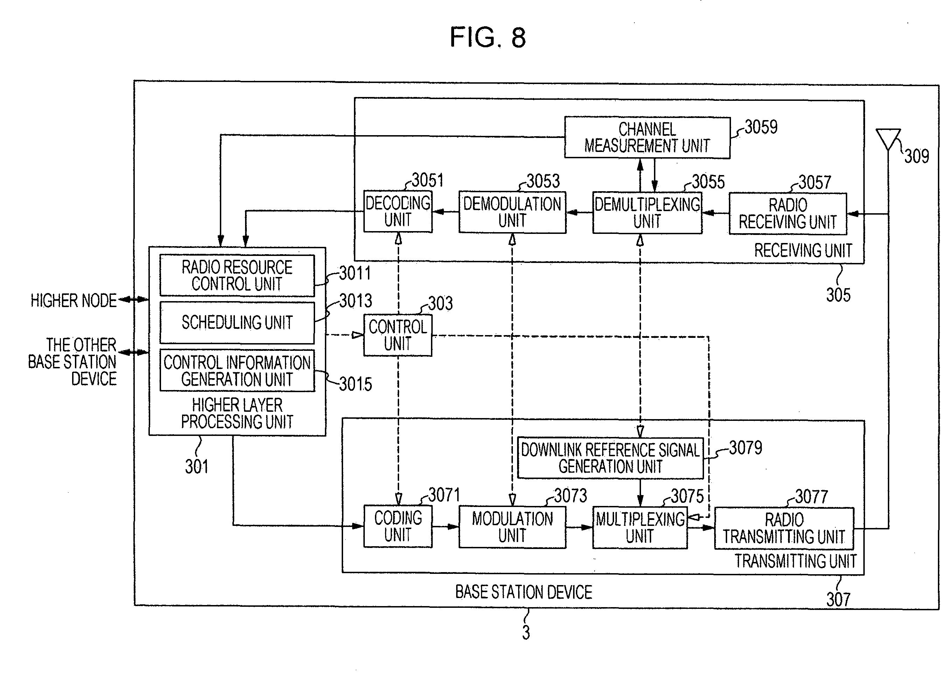

Fig. 8 is a schematic block diagram illustrating the structure of the base station device 3 according to this embodiment. As illustrated in the drawing, the base station device 3 includes a higher layer processing unit 301, a control unit 303, a receiving unit 305, a transmitting unit 307, and a transmitting/receiving antenna 309. The higher layer processing unit 301 includes a radio resource control unit 3011, a scheduling unit 3013, and a control information generation unit 3015. The receiving unit 305 includes a decoding unit 3051, a demodulation unit 3053, a demultiplexing unit 3055, a radio receiving unit 3057, and a channel measurement unit 3059. The transmitting unit 307 includes a coding unit 3071, a modulation unit 3073, a multiplexing unit 3075, a radio transmitting unit 3077, and a downlink reference signal generation unit 3079.

The higher layer processing unit 301 processes a medium access control (MAC) layer, a packet data convergence protocol (PDCP) layer, a radio link control (RLC) layer, and a radio resource control (RRC) layer. In addition, the higher layer processing unit 301 generates control information for controlling the receiving unit 305 and the transmitting unit 307 and outputs the control information to the control unit 303.

The radio resource control unit 3011 of the higher layer processing unit 301 generates, for example, downlink data (transport block), an RRC signal, and a MAC control element (CE) to be arranged in downlink PDSCH or acquires a higher node and outputs the generated data or the acquired higher node to the transmitting unit 307. The radio resource control unit 3011 manages various setting information items of each of the mobile station devices 1. The radio resource control unit 3011 manages the uplink-downlink configuration of each of the mobile station devices 1.

The scheduling unit 3013 of the higher layer processing unit 301 determines a frequency and a subframe to which the physical channels (PDSCH and PUSCH) are allocated, a coding rate, a modulation method and a transmission power of the physical channels (PDSCH and PUSCH) from the channel quality and the estimated value of the propagation path input from the channel measurement unit 3059. The scheduling unit 3013 determines whether to schedule the downlink physical channel and/or the downlink physical signal or to schedule the uplink physical channel and/or the uplink physical signal in the flexible subframe. The scheduling unit 3013 generates control information for controlling the receiving unit 305 and the transmitting unit 307 on the basis of the scheduling result, and outputs the generated control information to the control unit 303. The scheduling unit 3013 transmits the scheduling result of the physical channels (PDSCH and PUSCH) to the control information generation unit 3015.

The control information generation unit 3015 generates information used to schedule the physical channels (PDSCH and PUSCH) on the basis of the scheduling result input from the scheduling unit 3013. The control information generation unit 3015 generates the first information, the second information, the third information, the fourth information, the fifth information, and/or the sixth information. The control information generation unit 3015 outputs the generated information to the transmitting unit 307.

The control unit 303 generates control signals for controlling the receiving unit 305 and the transmitting unit 307, on the basis of the control information from the higher layer processing unit 301. The control unit 303 outputs the generated control signals to the receiving unit 305 and the transmitting unit 307 to control the receiving unit 305 and the transmitting unit 307.

The receiving unit 305 performs demultiplexing, demodulation and decoding on the reception signal received from the mobile station device 1 through the transmitting/receiving antenna 309 in response to the control signals input from the control unit 303, and outputs the decoded information to the higher layer processing unit 301. The radio receiving unit 3057 converts (down conversion) the uplink signal received through the transmitting/receiving antenna 309 into a signal having an intermediate frequency, and removes unnecessary frequency components. Thereafter, the radio receiving unit controls an amplification level such that the signal level is appropriately maintained, performs orthogonal demodulation on the signal on the basis of the in-phase component and the orthogonal component of the received signal, and converts the orthogonal-demodulated analog signal into a digital signal.

The radio receiving unit 3057 removes a portion corresponding to the guard interval (GI) from the converted digital signal. The radio receiving unit 3057 performs fast Fourier transform (FFT) on the signal from which the guard interval has been removed, extracts a signal in the frequency domain, and outputs the extracted signal to the demultiplexing unit 3055.

The demultiplexing unit 1055 demultiplexes the signal input from the radio receiving unit 3057 into signals, such as the PUCCH, the PUSCH, and the uplink reference signal. The demultiplexing process is determined by the radio resource control unit 3011 of the base station device 3 in advance and is performed on the basis of the allocation information of the radio resources included in the uplink grant which is notified to each mobile station device 1. In addition, the demultiplexing unit 3055 compensates for the propagation paths of the PUCCH and the PUSCH from the estimated value of the propagation path input from the channel measurement unit 3059. The demultiplexing unit 3055 outputs the demultiplexed uplink reference signal to the channel measurement unit 3059.

The demodulation unit 3053 performs inverse discrete Fourier transform (IDFT) on the PUSCH to acquire modulated symbols, and demodulates the received signal using a modulation method which is predetermined for each of the modulated symbols of the PUCCH and the PUSCH, a predetermined modulation method such as binary phase shift keying (BPSK), QPSK, 16QAM, or 64QAM, or a modulation method which is notified from the base station device to each mobile station device 1 with the uplink grant in advance. The demodulation unit 3053 demultiplexes the modulated symbols of a plurality of uplink data items which are transmitted through the same PUSCH by the MIMO SM, on the basis of the number of spatial-multiplexed sequences, which are notified to each mobile station device 1 by the uplink grant in advance, and information indicating precoding for the sequences.

The decoding unit 3051 decodes the coded bits of the demodulated PUCCH and PUSCH at a predetermined coding rate of a predetermined coding method or a coding rate which is notified from the base station device to the mobile station device 1 with the uplink grant in advance and outputs the decoded uplink data and the uplink control information to the higher layer processing unit 101. When the PUSCH is retransmitted, the decoding unit 3051 performs decoding using the coded bits, which have been input from the higher layer processing unit 301 and then stored in a HARQ buffer, and the demodulated coded bits. The channel measurement unit 309 measures, for example, the estimated value of the propagation path and the quality of the channel from the uplink reference signal which is input from the demultiplexing unit 3055 and outputs the measured values to the demultiplexing unit 3055 and the higher layer processing unit 301.

The transmitting unit 307 generates a downlink reference signal, performs coding and modulation on the HARQ indicator, downlink control information, and downlink data input from the higher layer processing unit 301, multiplexes the PHICH, the PDCCH, the ePDCCH, the PDSCH, and the downlink reference signal, and transmits the signals to the mobile station device 1 through the transmitting/receiving antenna 309, in response to the control signal input from the control unit 303.

The coding unit 3071 codes the HARQ indicator, downlink control information, and downlink data input from the higher layer processing unit 301 using a predetermined coding method, such as block coding, convolution coding, or turbo coding, or the coding method determined by the radio resource control unit 3011. The modulation unit 3073 modulates the coded bits input from the coding unit 3071 using a predetermined modulation method, such as BPSK, QPSK, 16QAM, or 64QAM, or the modulation method determined by the radio resource control unit 3011.

The downlink reference signal generation unit 3079 generates, as the downlink reference signal, the sequence which has been known to the mobile station device 1 and is calculated according to a predetermined rule on the basis of, for example, a physical cell identity (PCI) for identifying the base station device 3. The multiplexing unit 3075 multiplexes the modulated symbol of each modulated channel and the generated downlink reference signal. That is, the multiplexing unit 3075 arranges the modulated symbol of each modulated channel and the generated downlink reference signal in the resource elements.

The radio transmitting unit 3077 performs inverse fast Fourier transform (IFFT) on the multiplexed modulated symbol, performs modulation using the OFDM method, and adds the guard interval to the OFDM symbol on which the OFDM modulation has been performed. Subsequently, the radio transmitting unit generates a baseband digital signal, converts the baseband digital signal into an analog signal, and generates an in-phase component and an orthogonal component of the intermediate frequency from the analog signal. Thereafter, the radio transmitting unit removes extra frequency components for the intermediate frequency band, and converts (up-conversion) the signal having the intermediate frequency into a signal having a high frequency in order to remove extra frequency components. Thereafter, the radio transmitting unit amplifies a power, and outputs and transmits the amplified power through the transmitting/receiving antenna 309.

Next, effective settings and procedures of resetting of the flexible subframe in the first to fifth embodiments will be described. In the first, second, and fifth embodiments, an initial setting procedure will be described. In the third and fourth embodiments, a resetting of the flexible subframe will be described.

Hereinafter, a first embodiment of the present invention will be described.

In the first embodiment, the base station device 3 repeatedly notifies (transmits) a system information block type 1 message. The system information block type 1 message includes at least the following information.
- First information (TDD-Config) that indicates the arrangement of the downlink subframe, the uplink subframe and the special subframe in the radio frame
- Information indicating the structure (lengths of DwPTS, GP, and UpPTS) of the special subframe
- Information related to scheduling of the system information message which transmits the system information block type x
The system information block type 1 is transmitted in the subframe 5 of the radio frame that satisfies SFN mod 2=0. A system frame number (SFN) is a radio frame number.

The base station device 3 repeatedly notifies (transmits) the system information message that transmits the system information block type x. The system information message includes at least the following information.
• Second information (TDD-Config-vx) that indicates the arrangement of the downlink subframe, the uplink subframe, the special subframe and the flexible subframe in the radio frame

The structure of the subframes in the radio frame is referred to as an uplink-downlink configuration. The system information block is a message received by the plurality of mobile station devices 1. That is, the system information block is information unique to the cell. The system information block is transmitted by the PDSCH.

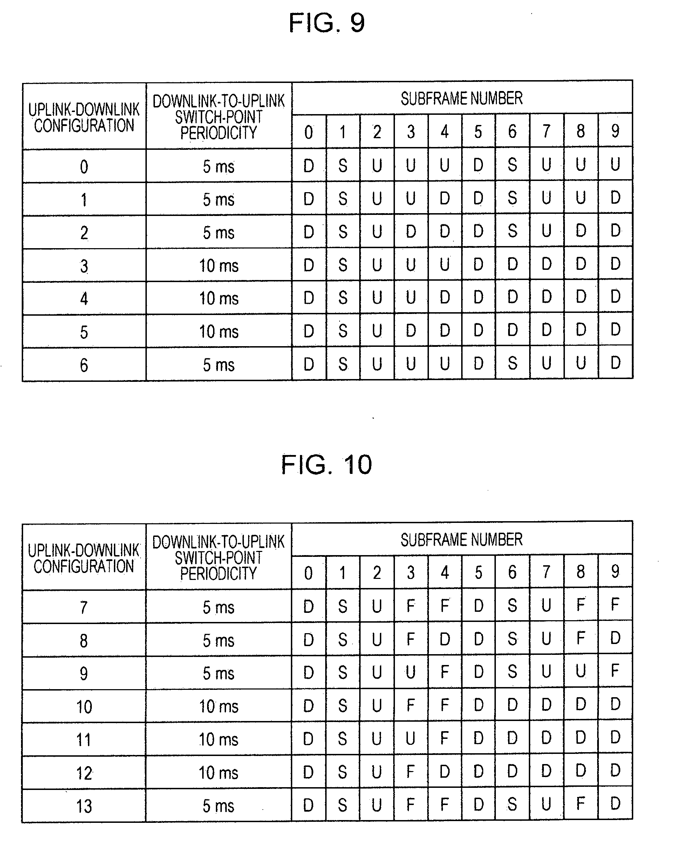

Fig. 9 is a table illustrating an example of the uplink-downlink configuration indicated by the first information of the first embodiment. Fig. 10 is a table illustrating an example of the uplink-downlink configuration indicated by the second information of the first embodiment. In Figs. 9 and 10, D indicates the downlink subframe, U indicates the uplink subframe, S indicates the special subframe, and F indicates the flexible subframe.

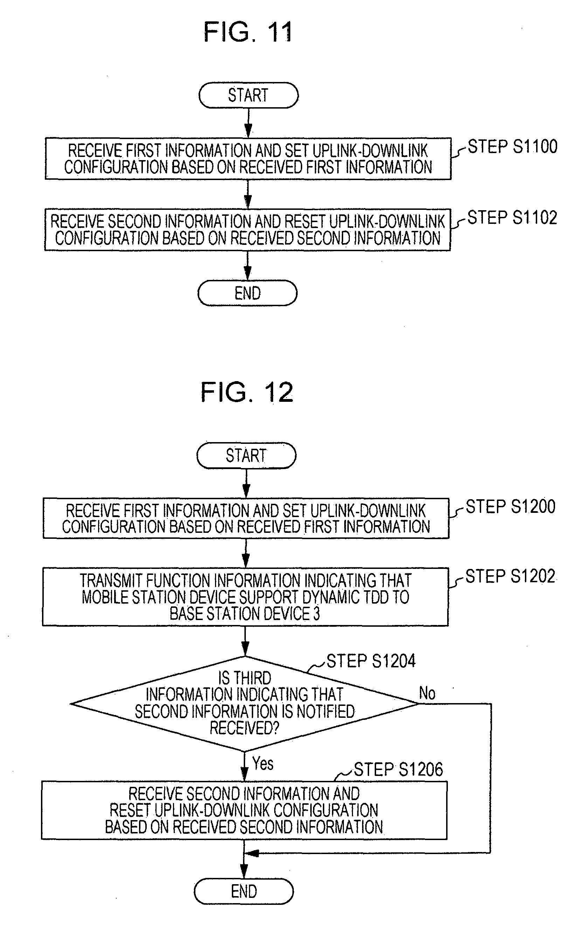

Fig. 11 is a diagram showing an example of an operation of the mobile station device 1 according to the first embodiment. The mobile station device 1 that supports the dynamic TDD system initially receives the first information in the subframe 5 of the radio frame satisfying SFN mod 2=0, and sets the uplink-downlink configuration on the basis of the received first information (step S1100). The mobile station device 1 that supports the dynamic TDD system receives the second information in the subframe determined as the downlink subframe on the basis of the first information, and resets the uplink-downlink configuration on the basis of the received second information (step S1102).

The mobile station device 1 that supports the dynamic TDD system may receive the second information after setting the uplink-downlink configuration on the basis of the first information, or may not set the uplink-downlink configuration on the basis of the second information.

The mobile station device 1 may transmit the function information indicating whether or not the dynamic TDD function is supported to the base station device 3. The mobile station device 1 that supports the dynamic TDD system may transmit the function information indicating whether or not the dynamic TDD system is supported to the base station device 3. The mobile station device 1 that does not support the dynamic TDD system may transmit the function information indicating whether or not the dynamic TDD system is supported to the base station device 3. The function information may not be transmitted to the base station device 3.

The function information is referred to as an UE capability bit or UE capability information.

When the base station device 3 receives the function information indicating that the dynamic TDD system is supported, the mobile station device 1 determines that the uplink-downlink configuration has been set on the basis of the second information. When the base station device 3 receives the function information indicating that the dynamic TDD system is not supported, or when the base station device 3 does not receive the function information, the mobile station device 1 determines that the uplink-downlink configuration has been set on the basis of the first information.

When the dynamic TDD system is not applied, the base station device 3 may not transmit the second information. That is, when the flexible subframe is not included in the radio frame, the base station device 3 may not transmit the second information.

Accordingly, the base station device 3 can efficiently communicate with both the mobile station device 1 that supports the dynamic TDD system and the mobile station device 1 that does not support the dynamic TDD system.

Hereinafter, a second embodiment of the present invention will be described.

In the second embodiment, the base station device 3 repeatedly notifies (transmits) the third information in addition to the first information and the second information. The third information indicates whether or not the base station device 3 notifies the second information (system information block type x) though the system information message. That is, the third information indicates whether or not the base station device 3 applies the dynamic TDD system. The third information is one bit.

The third information may not indicate that the base station device 3 does not notify the second information. In this case, the base station device 3 that does not notify the second information does not transmit the third information. Thus, it is possible to reduce overhead of the downlink signal.

The third information may be included in a radio resource control (RRC) layer message, a medium access control (MAC) control element (CE), or downlink control information of a physical layer. The third information may be transmitted by the PBCH, ePDCCH, PDCCH or PDSCH.

Fig. 12 is a diagram showing an example of an operation of the mobile station device 1 according to the second embodiment. The mobile station device 1 that supports the dynamic TDD system initially receives the first information in the subframe 5 of the radio frame satisfying SFN mod 2=0, and sets the uplink-downlink configuration on the basis of the received first information (step S1200). The mobile station device 1 that supports the dynamic TDD system transmits function information indicating whether or not the dynamic TDD system is supported to the base station device 3 (step S1202). The mobile station device 1 that supports the dynamic TDD system tries to receive the third information (step S1204). When receiving the third information indicating that the base station device 3 notifies the second information (step S1204-Yes), the mobile station device 1 that supports the dynamic TDD system receives the second information, and resets the uplink-downlink configuration on the basis of the received second information (step S1206).

When the third information indicating that the base station device 3 does not notify the second information is received, or when the third information is not received (step S1204-No), the mobile station device 1 that supports the dynamic TDD system may not receive the second information, or may not set the uplink-downlink configuration on the basis of the second information. When the third information indicating that the base station device 3 does not notify the second information is received, or when the third information is not received, the receiving unit 105 may not receive the second information and/or the receiving unit 105 may not output the second information to the subframe setting unit 1015, and/or the subframe setting unit 1015 may not reset the uplink-downlink configuration on the basis of the second information.

For example, when the function information indicating whether or not the dynamic TDD system is supported is received, the base station device 3 that applies the dynamic TDD system transmits the third information indicating that the base station device 3 notifies the second information. For example, when the function information indicating that the dynamic TDD system is not supported is received, or when the function information is not received, the base station device 3 that applies the dynamic TDD system does not transmit the third information to the mobile station device 1.

The base station device 3 that does not apply the dynamic TDD system may not transmit the second information and/or the third information. That is, when the flexible subframe is not included in the radio frame, the base station device 3 may not transmit the second information and/or the third information.

Accordingly, the mobile station device 1 that supports the dynamic TDD system can determine whether to try to receive the system information message that transmits the system information block type x including the second information on the basis of the third information of one bit, and, thus, it is possible to reduce a load in the receiving process of the mobile station device 1.

Hereinafter, a third embodiment of the present invention will be described.

In the third embodiment, a procedure of resetting the uplink-downlink configuration including the flexible subframe will be described. The third embodiment can be applied to the first embodiment and the second embodiment.

In the third embodiment, the base station device 3 repeatedly transmits the system information message which transmits the system information block type 1 message and the system information block type x. In the third embodiment, the system information block type 1 message includes at least the following information.
- First information indicating the arrangement of the downlink subframe, the uplink subframe and the special subframe in the radio frame
- Fourth information (systemInfoValueTag) indicating whether or not the second information is changed
- Information indicating the structure (lengths of DwPTS, GP and UpPTS) of the special subframe
- Information related to the scheduling of the system information message which transmits the system information block type x

When the second information is not changed, the base station device 3 repeatedly transmits the fourth information to which the same value is set. When the second information is changed, the base station device 3 sets the fourth information to have a value greater than the set value by one. For example, a value from 0 to 31 is set to the fourth information. For example, thirty one is set to the fourth information, and when the second information is changed, the base station device 3 sets the fourth information to zero.

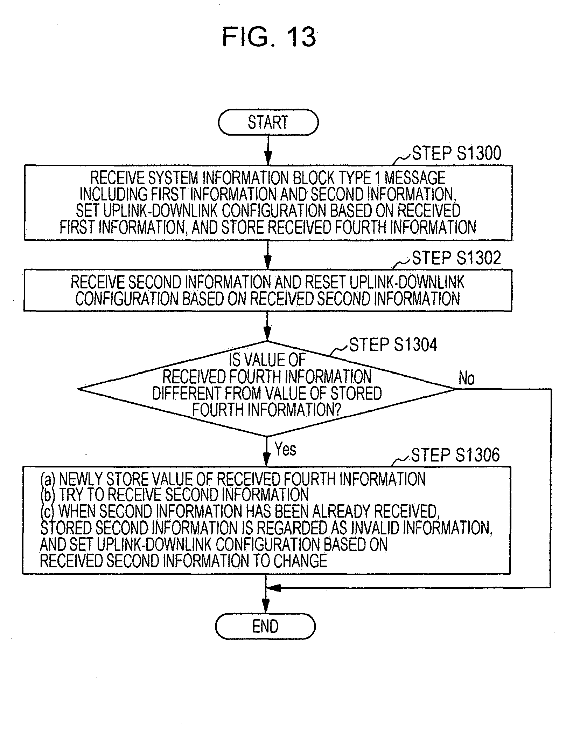

Fig. 13 is a diagram illustrating an example of an operation of the mobile station device 1 in the third embodiment. The mobile station device 1 that supports the dynamic TDD system initially receives the system information block type 1 message including the first information and the fourth information in the subframe 5 of the radio frame satisfying SFN mod 2=0, sets the uplink-downlink configuration on the basis of the received first information, and stores the value of the received fourth information (step S1300). The mobile station device 1 that supports the dynamic TDD system receives the second information in the subframe determined as the downlink subframe on the basis of the first information, and resets the uplink-downlink configuration on the basis of the received second information (step S1302).

The mobile station device 1 that supports the dynamic TDD system repeatedly receives the system information block type 1 message, and determines whether or not a value of the received fourth information and the stored value are different from each other (step S1304). When the value of the fourth information received in step S1304 is different from the value of the fourth information stored in step S1302 (step S1306-Yes), (a) the value of the fourth information received in step S1304 is newly stored, (b) the reception of the second information is tried, and (c) the stored second information (the uplink-downlink configuration set based on the second information) is regarded as being invalid, and the uplink-downlink configuration is reset based on the received second information when the reception of the second information is finished in the subframe determined as the downlink subframe on the basis of the first information (step S1306).

Accordingly, it is possible to efficiently reset the uplink-downlink configuration including the flexible subframe.

Hereinafter, a fourth embodiment of the present invention will be described.

In the fourth embodiment, a procedure of resetting the uplink-downlink configuration including the flexible subframe will be described. The fourth embodiment can be applied to the first embodiment and the second embodiment.

In the third embodiment, the base station device 3 transmits the system information message which transmits the system information block type 1 message and the system information block type x and the fifth information (systemInfoModification). The fifth information indicates that the second information is changed. The fifth information may not indicate that the second information is changed. The fifth information may be included in the paging message.

When the second information is changed, the base station device 3 transmits the fifth information. When the fifth information is received, the mobile station device 3 tries to receive the second information, and resets the uplink-downlink configuration on the basis of the received second information.

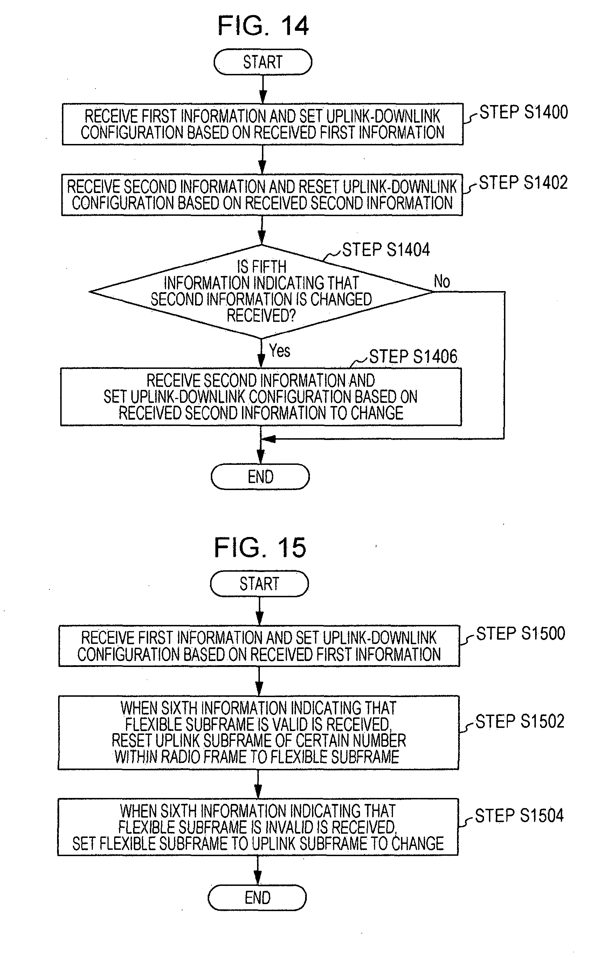

Fig. 14 is a diagram showing an example of an operation of the mobile station device 1 in the fourth embodiment. The mobile station device 1 that supports the dynamic TDD system initially receives the first information in the subframe 5 of the radio frame satisfying SFN mod 2=0, and sets the uplink-downlink configuration on the basis of the received first information (step S1400). The mobile station device 1 that supports the dynamic TDD system receives the second information in the subframe determined as the downlink subframe on the basis of the first information, and resets the uplink-downlink configuration on the basis of the received second information (step S1402).

When the paging message including the fifth information indicating that the second information is changed (step S1404-Yes), the mobile station device 1 that supports the dynamic TDD system receives the second information, and resets the uplink-downlink configuration on the basis of the received second information. For example, the mobile station device 1 receives the fifth information from the paging message.

Accordingly, it is possible to efficiently reset the uplink-downlink configuration including the flexible subframe.

Hereinafter, a fifth embodiment of the present invention will be described.

In the fifth embodiment, a procedure of initially resetting the uplink-downlink configuration including the flexible subframe will be described.

In the fifth embodiment, the base station device 3 transmits the system information block type 1 message and the sixth information. The sixth information indicates whether or not the flexible subframe is valid. The sixth information can be expressed as information indicating whether or not the flexible subframe is activated. The sixth information is one bit. The default setting of the flexible subframe is invalid.

The sixth information may be included in the RRC layer message, MAC, CE, or downlink control information of a physical layer. The third information may be transmitted by the PBCH, ePDCCH, PDCCH or PDSCH. The third information may be transmitted by the PDCCH or the ePDCCH arranged in the common search space. The common search space for the ePDCCH includes different resources from the common search space for the PDCCH. The common search space is a resource in which the plurality of mobile station devices 1 monitor the ePDCCH/PDCCH. The ePDCCH/PDCCH monitored by the plurality of mobile station devices 1 and the ePDCCH/PDCCH monitored by the single mobile station device 1 are arranged in the common search space.

The base station device 3 may transmit the sixth information to only the specific mobile station device 1. That is, the sixth information may be a parameter unique to the mobile station device. Thus, the base station device 3 can apply the dynamic TDD system to only some of the mobile station devices 1 that support the dynamic TDD system.

Fig. 15 is a diagram showing an example of an operation of the mobile station device 1 in the fifth embodiment. The mobile station device 1 that supports the dynamic TDD system initially receives the first information in the subframe 5 of the radio frame satisfying SFN mod 2=0, and sets the uplink-downlink configuration on the basis of the received first information (step S1500).

When the sixth information indicating that the flexible subframe is valid is received in the subframe determined as the downlink subframe on the basis of the first information, the mobile station device 1 that supports the dynamic TDD system resets the uplink subframe of a specific number in the uplink-downlink configuration set in step S1500 to the flexible subframe (step S1502). That is, when the sixth information indicating that the flexible subframe is valid is received, the mobile station device 1 that supports the dynamic TDD system resets an uplink subframe of a specific number in the radio frame to a flexible subframe.

For example, the specific number is {3, 4, 8, 9} or {3, 4, 8}. The sixth information may indicate the specific number. Alternatively, the sixth information may include information indicating the specific number.

When the sixth information indicating that the flexible subframe is invalid is received, the mobile station device 1 that supports the dynamic TDD system resets the flexible subframe to the uplink subframe (step S1504).

The sixth information is preferably transmitted in a subframe of a number other than the specific number. Alternatively, the sixth information may be transmitted in a first subframe of the radio frame. Accordingly, even when the base station device 3 does not know that the mobile station device 3 fails to receive the sixth information, the mobile station device 3 can correctly receive the sixth information.

The mobile station device 1 that sets the flexible subframe to be valid may reset the uplink-downlink configuration on the basis of the sixth information indicating that the flexible subframe is valid. The mobile station device 1 that sets the flexible subframe to be invalid may reset the uplink-downlink configuration on the basis of the sixth information indicating that the flexible subframe is invalid.

The mobile station device 1 may reset the uplink-downlink configuration on the basis of the sixth information for the next radio frame of the radio frame that receives the sixth information. In this case, the base station device 3 preferably transmits the sixth information in a subframe of a number smaller than the specific number in the radio frame.

The mobile station device 1 may reset the uplink-downlink configuration for the next radio frame of the radio frame that receives the sixth information on the basis of the sixth information. In this case, the base station device 3 does not need to transmit the sixth information in the subframe of a number smaller than the specific number in the radio frame.

When the sixth information indicating that the flexible subframe is valid is received, the mobile station device 1 that supports the dynamic TDD system may reset the downlink subframe of the specific number in the radio frame to the flexible subframe.

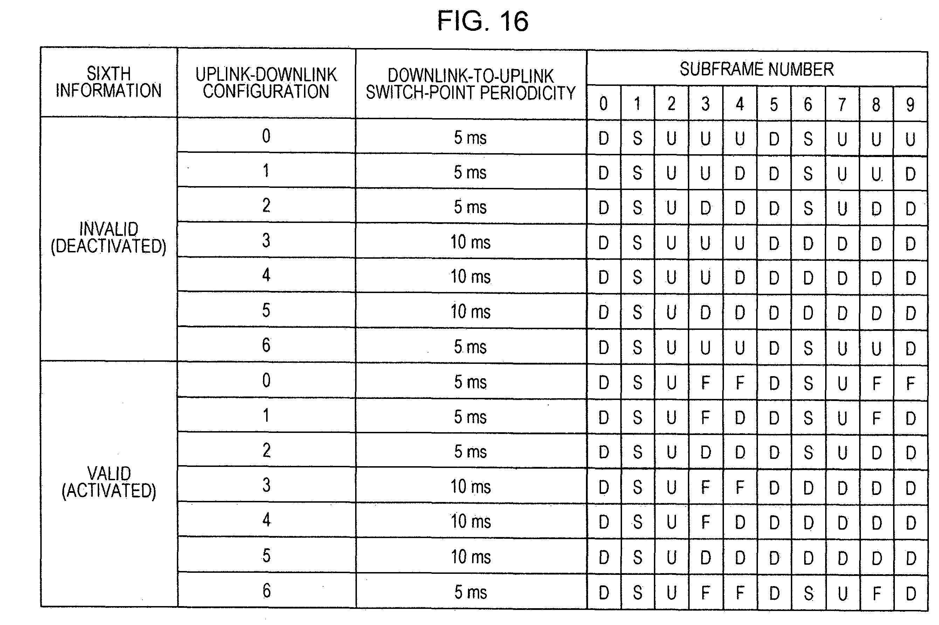

Fig. 16 is a diagram showing an example of the uplink-downlink configuration in the fifth embodiment. In Fig. 16, D indicates a downlink subframe, U indicates an uplink subframe, S indicates a special subframe, and F indicates a flexible subframe. In Fig. 16, when the sixth information indicating that the flexible subframe is valid is received, the mobile station device 1 that supports the dynamic TDD system resets an uplink subframe of {3, 4, 8, 9} in the radio frame to the flexible subframe.

For example, in Fig. 16, when the mobile station device that sets the uplink-downlink configuration 0 receives the sixth information indicating that the flexible subframe is valid, the mobile station device regards that the radio frame includes subframes of {DSUFFDSUFF}.

Accordingly, it is possible to efficiently set the uplink-downlink configuration including the flexible subframe.

The program which runs on the base station device 3 and the mobile station device 1 according to the invention may be a program (which causes a computer to function) which controls a central processing unit (CPU) such that the functions of the above-described embodiment of the invention are implemented. The information handled by these devices is temporarily stored in a random access memory (RAM) during the process and is then stored in various types of read only memories (ROMs), such as a flash ROM, or a hard disk drive (HDD). Then, the CPU reads, corrects, and writes the information, if necessary.

Some functions of the mobile station device 1 and the base station device 3 according to the above-described embodiment may be implemented by a computer. In this case, a program for implementing the control function may be recorded on a computer-readable recording medium and a computer system may read the program recorded on the recording medium and execute the program to implement the functions.

The term "computer system" means a computer system that is provided with the mobile station device 1 or the base station device 3 and includes an OS or hardware such as peripheral devices. The term "computer-readable recording medium" means a portable medium, such as a flexible disk, a magneto-optical disk, a ROM, or a CD-ROM, or a storing device, such as a hard disc provided in the computer system.

The "computer-readable recording medium" may include a recording medium that dynamically stores the program in a short time, such as a communication cable used when the program is transmitted through a network, such as the Internet, or a communication line, such as a telephone line, and a recording medium that stores the program for a predetermined period of time, such as a volatile memory in a computer system that serves as a server or a client in this case. The "program" may be a program that implements some of the above-mentioned functions or a program that implements the above-mentioned functions in combination with the program which has been stored in the computer system.

Each of the mobile station device 1 and the base station device 3 according to the above-described embodiments may be partly or entirely realized in the form of an LSI, which is a typical integrated circuit, or a chip set. Each functional block of the mobile station device 1 and the base station device 3 may be individually integrated into a chip, or some or all of the functional blocks may be integrated into a chip. A method for achieving the integrated circuit is not limited to the LSI and it may be achieved by a dedicated circuit or a general-purpose processor. In addition, when a technique for achieving an integrated circuit which replaces the LSI technique will be developed with the progress of a semiconductor technique, the integrated circuit manufactured by the developed technique can also be used.

The embodiment of the invention has been described above in detail with reference to the drawings. However, the detailed structure is not limited to the above-described embodiment and the invention also includes a change in the design within the scope and spirit of the invention. Reference Signs List

- 1 (1A, 1B, 1C): Mobile station device
- 3: Base station device
- 101: Higher layer processing unit
- 103: Control unit
- 105: Receiving unit
- 107: Transmitting unit
- 301: Higher layer processing unit
- 303: Control unit
- 305: Receiving unit
- 307: Transmitting unit
- 1011: Radio resource control unit
- 1013: Scheduling information interpretation unit
- 1015: Subframe setting unit
- 3011: Radio resource control unit
- 3013: Scheduling unit
- 3015: Control information generation unit

## Claims

1. A base station device that communicates with a mobile station device using a time division duplex system in a single cell, the base station device comprising:
a transmitting unit that transmits first information indicating an arrangement of a first subframe, a second subframe and a third subframe in a frame, and second information indicating an arrangement of the first subframe, the second subframe, the third subframe and a fourth subframe in the frame to the mobile station device,
wherein the first subframe is reserved for downlink transmission,
the second subframe is reserved for uplink transmission,
the third subframe includes a field reserved for the downlink transmission, a field reserved for the uplink transmission, and a field of a guard period, and
the fourth subframe is a subframe reserved for the uplink transmission and the downlink transmission.

2. The base station device according to claim 1, wherein the transmitting unit transmits third information indicating that the second information is received.

3. The base station device according to claim 1 or 2, wherein the transmitting unit does not transmit the second information and/or the third information when the fourth subframe is not included in the frame.

4. The base station device according to any one of claims 1 to 3, wherein the transmitting unit transmits a message including the first information and the fourth information indicating whether or not the second information is changed.

5. The base station device according to any one of claims 1 to 3, wherein the transmitting unit transmits fifth information indicating that the second information is changed.

6. A wireless communication method used in a base station device communicating with a mobile station device using a time division duplex system in a single cell, the method comprising:
transmitting first information indicating an arrangement of a first subframe, a second subframe and a third subframe in a frame, and second information indicating an arrangement of the first subframe, the second subframe, the third subframe and a fourth subframe in the frame to the mobile station device,
wherein the first subframe is reserved for downlink transmission,
the second subframe is reserved for uplink transmission,
the third subframe includes a field reserved for the downlink transmission, a field reserved for the uplink transmission, and a field of a guard period, and
the fourth subframe is a subframe reserved for the uplink transmission and the downlink transmission.

7. An integrated circuit that is mounted in a base station device communicating with a mobile station device using a time division duplex system in a single cell, the integrated circuit causing the base station device to exhibit a function of:
transmitting first information indicating an arrangement of a first subframe, a second subframe and a third subframe in a frame, and second information indicating an arrangement of the first subframe, the second subframe, the third subframe and a fourth subframe in the frame to the mobile station device,
wherein the first subframe is reserved for downlink transmission,
the second subframe is reserved for uplink transmission,
the third subframe includes a field reserved for the downlink transmission, a field reserved for the uplink transmission, and a field of a guard period, and
the fourth subframe is a subframe reserved for the uplink transmission and the downlink transmission.

8. A mobile station device that communicates with a base station device using a time division duplex system in a single cell, the mobile station device comprising:
a receiving unit that receives first information indicating an arrangement of a first subframe, a second subframe and a third subframe in a frame, and second information indicating an arrangement of the first subframe, the second subframe, the third subframe and a fourth subframe in the frame from the base station device; and
a setting unit that sets the subframe on the basis of the first information or the second information,
wherein the first subframe is reserved for downlink transmission,
the second subframe is reserved for uplink transmission,
the third subframe includes a field reserved for the downlink transmission, a field reserved for the uplink transmission, and a field of a guard period, and
the fourth subframe is a subframe reserved for the uplink transmission or the downlink transmission.

9. The mobile station device according to claim 8, wherein the receiving unit receives third information indicating that the second information is received.

10. The mobile station device according to claim 9, wherein when the third information is not received, the receiving unit does not receive the second information, or does not output the second information to the setting unit.

11. The mobile station device according to any one of claims 8 to 10, wherein the receiving unit receives a message including the first information and a fourth information indicating whether or not the second information is changed.

12. The mobile station device according to any one of claims 8 to 10, wherein the receiving unit receives fifth information indicating that the second information is changed.

13. The mobile station device according to claim 11 or 12,
wherein the receiving unit tries to receive the second information when receiving the fifth information or the fourth information indicating that the second information is changed.

14. A wireless communication method used in a mobile station device communicating with a base station device using a time division duplex system in a single cell, the method comprising:
receiving first information indicating an arrangement of a first subframe, a second subframe and a third subframe in a frame, and second information indicating an arrangement of the first subframe, the second subframe, the third subframe and a fourth subframe in the frame from the base station device; and
setting the subframe on the basis of the first information or the second information,
wherein the first subframe is reserved for downlink transmission,
the second subframe is reserved for uplink transmission,
the third subframe includes a field reserved for the downlink transmission, a field reserved for the uplink transmission, and a field of a guard period, and
the fourth subframe is a subframe reserved for the uplink transmission or the downlink transmission.

15. An integrated circuit that is mounted in a mobile station device communicating with a base station device using a time division duplex system in a single cell, the integrated circuit causing the mobile station device to exhibit a function of:
receiving first information indicating an arrangement of a first subframe, a second subframe and a third subframe in a frame, and second information indicating an arrangement of the first subframe, the second subframe, the third subframe and a fourth subframe in the frame from the base station device; and
setting the subframe on the basis of the first information or the second information,
wherein the first subframe is reserved for downlink transmission,
the second subframe is reserved for uplink transmission,
the third subframe includes a field reserved for the downlink transmission, a field reserved for the uplink transmission, and a field of a guard period, and
the fourth subframe is a subframe reserved for the uplink transmission or the downlink transmission.

16. A base station device that communicates with a mobile station device using a time division duplex system in a single cell, the base station device comprising:
a transmitting unit that transmits first information indicating an arrangement of a first subframe, a second subframe and a third subframe in a frame, and sixth information indicating that a fourth subframe is valid in the frame to the mobile station device,
wherein the first subframe is reserved for downlink transmission,
the second subframe is reserved for uplink transmission,
the third subframe includes a field reserved for the downlink transmission, a field reserved for the uplink transmission, and a field of a guard period, and
the fourth subframe is a subframe reserved for the uplink transmission and the downlink transmission.

17. The base station device according to claim 16, wherein the sixth information indicates that the first subframe of a specific number is valid as the fourth subframe in the frame.

18. The base station device according to claim 16, wherein the sixth information indicates that the second subframe of a specific number is valid as the fourth subframe in the frame.

19. The base station device according to claim 17 or 18, wherein the sixth information indicates the specific number.

20. A wireless communication method used in a base station device communicating with a mobile station device using a time division duplex system in a single cell, the method comprising:
transmitting first information indicating an arrangement of a first subframe, a second subframe and a third subframe in a frame, and sixth information indicating that a fourth subframe is valid in the frame to the mobile station device,
wherein the first subframe is reserved for downlink transmission,
the second subframe is reserved for uplink transmission,
the third subframe includes a field reserved for the downlink transmission, a field reserved for the uplink transmission, and a field of a guard period, and
the fourth subframe is a subframe reserved for the uplink transmission and the downlink transmission.

21. An integrated circuit that is mounted in a base station device communicating with a mobile station device using a time division duplex system in a single cell, the integrated circuit causing the base station device to exhibit a function of:
transmitting first information indicating an arrangement of a first subframe, a second subframe and a third subframe in a frame, and sixth information indicating that a fourth subframe is valid in the frame to the mobile station device,
wherein the first subframe is reserved for downlink transmission,
the second subframe is reserved for uplink transmission,
the third subframe includes a field reserved for the downlink transmission, a field reserved for the uplink transmission, and a field of a guard period, and
the fourth subframe is a subframe reserved for the uplink transmission and the downlink transmission.

22. A mobile station device communicating with a base station device using a time division duplex system in a single cell, the mobile station device comprising:
a receiving unit that receives first information indicating an arrangement of a first subframe, a second subframe and a third subframe in a frame, and sixth information indicating that a fourth subframe is valid in the frame from the base station device; and
a setting unit that sets the subframe on the basis of the first information, or the first information and the sixth information,
wherein the first subframe is reserved for downlink transmission,
the second subframe is reserved for uplink transmission,
the third subframe includes a field reserved for the downlink transmission, a field reserved for the uplink transmission, and a field of a guard period, and
the fourth subframe is a subframe reserved for the uplink transmission and the downlink transmission.

23. The mobile station device according to claim 22, wherein the setting unit resets the first subframe of a specific number to the fourth subframe in the frame on the basis of the sixth information.

24. The mobile station device according to claim 22, wherein the setting unit resets the second subframe of a specific number to the fourth subframe in the frame on the basis of the sixth information.

25. The mobile station device according to claim 23 or 24, wherein the sixth information indicates the specific number.

26. A wireless communication method used in a mobile station device communicating with a base station device using a time division duplex system in a single cell, the method comprising:
receiving first information indicating an arrangement of a first subframe, a second subframe and a third subframe in a frame, and sixth information indicating that a fourth subframe is valid in the frame from the base station device; and
setting the subframe on the basis of the first information, or the first information and the sixth information,
wherein the first subframe is reserved for downlink transmission,
the second subframe is reserved for uplink transmission,
the third subframe includes a field reserved for the downlink transmission, a field reserved for the uplink transmission, and a field of a guard period, and
the fourth subframe is a subframe reserved for the uplink transmission and the downlink transmission.

27. An integrated circuit that is mounted in a mobile station device communicating with a base station device using a time division duplex system in a single cell, the integrated circuit causing the mobile station device to exhibit a function of:
receiving first information indicating an arrangement of a first subframe, a second subframe and a third subframe in a frame, and sixth information indicating that a fourth subframe is valid in the frame from the base station device; and
setting the subframe on the basis of the first information, or the first information and the sixth information,
wherein the first subframe is reserved for downlink transmission,
the second subframe is reserved for uplink transmission,
the third subframe includes a field reserved for the downlink transmission, a field reserved for the uplink transmission, and a field of a guard period, and
the fourth subframe is a subframe reserved for the uplink transmission and the downlink transmission.
